Europäisches Patentamt

(19) European Patent Office

Office européen des brevets

(11) Veröffentlichungsnummer: **0 070 835**
**B1**

(12) **EUROPÄISCHE PATENTSCHRIFT**

(45) Veröffentlichungstag der Patentschrift:
**20.06.84**

(51) Int. Cl.³: **H 02 K 23/04, H 02 K 1/14**

(21) Anmeldenummer: **81903117.0**

(22) Anmeldetag: **06.11.81**

(86) Internationale Anmeldenummer:
**PCT/DE 81/00192**

(87) Internationale Veröffentlichungsnummer:
**WO 82/02802 (19.08.82** Gazette 82/20)

(54) **ELEKTRISCHE MASCHINE, INSBESONDERE KLEINMOTOR.**

(30) Priorität: **03.02.81 DE 3103475**

(43) Veröffentlichungstag der Anmeldung:
**09.02.83 Patentblatt 83/6**

(45) Bekanntmachung des Hinweises auf die Patenterteilung:
**20.06.84 Patentblatt 84/25**

(84) Benannte Vertragsstaaten:
**DE GB NL**

(56) Entgegenhaltungen:
**DE - A - 2 205 219**
**DE - A - 2 226 025**
**DE - A - 2 527 461**
**FR - A - 1 167 248**
**FR - A - 2 268 377**

(73) Patentinhaber: **ROBERT BOSCH GMBH, Postfach 50,**
**D-7000 Stuttgart 1 (DE)**

(72) Erfinder: **CORBACH, Rainer, Amthaus 2,**
**D-4710 Lüdinghausen (DE)**
Erfinder: **ZIMMERMANN, Kurt, Berliner Strasse 8,**
**D-7120 Bietigheim (DE)**

(74) Vertreter: **Röser, Peter et al, c/o Robert Bosch GmbH**
**Robert-Bosch-Platz 1, D-7016 Gerlingen-Schillerhöhe**
**(DE)**

## Beschreibung

Stand der Technik

Die Erfindung geht aus von einer elektrischen Maschine, insbesondere einem Kleinmotor, mit mindestens zwei an einem Anker gegenüberliegenden sogenannten Zweikomponenten-Magneten nach der Gattung des Anspruchs. Solche Zweikomponenten-Magnete sind aus den Anforderungen nach höchstmöglichem magnetischen Fluss einerseits und Koerzitivfeldstärke zur Vermeidung von Entmagnetisierungserscheinungen andererseits entstanden. Diese beiden Forderungen mit einem einzigen Magnetwerkstoff zu erfüllen, ist nicht möglich, da Magnetwerkstoffe mit hoher Remanenz eine kleine Koerzitivfeldstärke und Magnetwerkstoffe mit einer hohen Koerzitivfeldstärke eine kleine Remanenz aufweisen. Da die Gefahr der Entmagnetisierung des Magneten besonders an den Magnetenden, und hier wiederum ausgeprägt beim Anlaufen bei niedrigen Temperaturen und an der sogenannten Ablaufkante, besteht, hat man bei diesen bekannten Zweikomponenten-Magneten an der sogenannten Ablaufkante einen hochkoerzitiven Magnetwerkstoff vorgesehen und im übrigen den Magneten aus einem Magnetwerkstoff mit möglichst hoher Remanenz gefertigt, der gegenüber dem hochkoerzitiven Werkstoff eine zwar kleinere Koerzitivfeldstärke, dafür aber eine wesentlich grössere Remanenz hat.

Die in Umfangsrichtung des Motors sich aneinander anschliessenden Abschnitte mit den vorstehend beschriebenen unterschiedlichen Magnetwerkstoffen erstrecken sich dabei in Axialrichtung des Ankers und stehen an beiden Stirnseiten des Ankers über diesen mit einem gewissen Überstand über. Dieser axiale Magnetüberhang bringt einen weiteren beträchtlichen Flussgewinn, der bei einer Magnetlänge von z.B. dem 1,4-fachen der Ankerlänge und bei einem Verhältnis des Ankerdurchmessers zur Ankerlänge von 1,83 26% beträgt.

Vorteile der Erfindung

Die erfindungsgemässe elektrische Maschine, insbesondere der erfindungsgemässe Kleinmotor, mit den kennzeichnenden Merkmalen des Anspruchs hat den Vorteil, dass die erfindungsgemässen Permanentmagnete gegenüber den herkömmlichen Zweikomponenten-Magneten eine weitere Steigerung der Flussausbeute bei unveränderter Entmagnetisierungsfestigkeit liefern. Da eine Entmagnetisierung an der in Drehrichtung des Rotors ablaufenden Kante des Magneten nur im Bereich des Ankers auftritt, hier aber nach wie vor ausschliesslich entmagnetisierungsfeste Kantenmasse vorhanden ist, erleidet die Entmagnetisierungsfestigkeit der erfindungsgemässen Permanentmagnete keinerlei Einbusse. Durch die zusätzlichen, über die Stirnseiten des Ankers vorstehenden Überstandsteile aus hochremanentem Magnetwerkstoff wird bei unveränderter Geometrie der Permanentmagnete die effektive Remanenz vergrössert. Bei einem Motor, dessen Permanentmagnete jeweils eine Abmessung von 25 x 42 mm aufweisen und dessen Ankerlänge 30 mm beträgt, wird bei einem in Umfangsrichtung gesehenen Abschnittsverhältnis von 14/11 der beiden Abschnitte mit unterschiedlichem Magnetwerkstoff eine Vergösserung des magnetischen Flusses von 2,8% erzielt. Die erhöhte Flussausbeute bei unveränderter Geometrie bedeutet aber auch eine höhere Leistung des Motors oder bei konstanter Motorleistung eine Einsparung an Kupfergewicht. Im vorstehend erwähnten Beispiel beträgt die Kupfereinsparung bei einem Motor von 1,1 kW und 12 V 5,2%.

Zeichnung

Die Erfindung ist anhand eines in der Zeichnung dargestellten Ausführungsbeispiels dargestellt und in der nachfolgenden Beschreibung näher erläutert. Es zeigen:

Fig. 1 einen Längsschnitt eines Kleinmotors in schematischer Darstellung,

Fig. 2 eine Draufsicht eines Permanentmagneten des Kleinmotors in Fig. 1,

Fig. 3 eine schematische Darstellung der Entmagnetisierungskurven der beiden in jedem Permanentmagneten gemäss Fig. 1 und 2 enthaltenen Magnetwerkstoffe.

Beschreibung des Ausführungsbeispiels

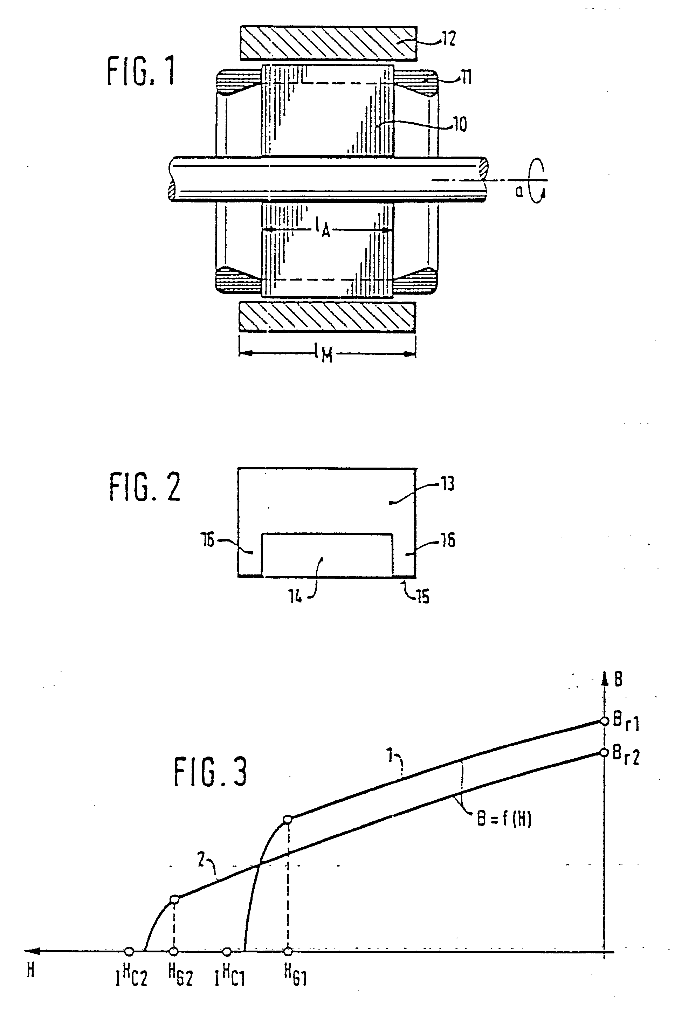

Bei dem in Fig. 1 als Beispiel einer elektrischen Maschine dargestellten Kleinmotor ist nur das für das Verständnis der Erfindung Wesentliche dargestellt. Der Motor weist einen Anker 10 auf, der den Rotor bildet. Er trägt in bekannter Weise in am Umfang verteilten Nuten eine Ankerwicklung 11. Der Anker 10 rotiert in der mit Pfeil a in Fig. 1 dargestellten Richtung.

Am Anker 10 sind zwei diametral gegenüberliegende Permanentmagnete 12 angeordnet, die in Axialrichtung des Ankers 10 über diesen beidseitig überstehen.

Wie aus Fig. 2 hervorgeht, weist jeder Permanentmagnet 12 einen in Axialrichtung sich erstreckenden ersten Abschnit 13 aus hochremanentem Magnetwerkstoff und einen in Axialrichtung sich erstreckenden zweiten Abschnitt 14 mit einem hochkoerzitiven Magnetwerkstoff auf. Der zweite Abschnitt 14 ist dabei an einem in Umfangsrichtung gesehenen Ende des Permanentmagneten 12 angeordnet, und zwar an demjenigen Ende, das durch die Drehrichtung des Rotors 10 bestimmt die sogenannte Ablaufkante 15 des Permanentmagneten 12 aufweist.

Wie aus Fig. 3 ersichtlich, weist der mit dem Index 1 gekennzeichnete hochremanente Magnetwerkstoff des Abschnittes 13 eine höhere Remanenz als der mit dem Index 2 gekennzeichnete hochkoerzitive Magnetwerkstoff auf ($B_{r1} > B_{r2}$). Dagegen ist die Koerzitivfeldstärke des hochkoerzitiven Magnetwerkstoffes 2 höher als die Koerzitivfeldstärke des hochremanenten Magnetwerkstoffes 1 ($_iH_{C1} < _iH_{C2}$) und damit die Grenzfeldstärke $H_{G2}$ des hochkoerzitiven Magnetwerkstoffes 2 grösser als die Grenzfeldstärke $H_{G1}$

des hochremanenten Magnetwerkstoffes 1.

Wie aus Fig. 2 ersichtlich, erstreckt sich der erste Abschnitt 13 aus hochremanentem Magnetwerkstoff über die gesamte axiale Länge $1_M$ des Permanentmagneten 12, der an den beiden Stirnseiten des Ankers 10 gleichmässig übersteht. Der zweite Abschnitt 14 mit dem hochkoerzitiven Magnetwerkstoff hingegen erstreckt sich im wesentlichen nur über die axiale Ankerlänge $1_A$. Die beiden sich in Axialrichtung an den zweiten Abschnitt 14 anschliessenden, über den Anker 10 überstehenden Überstandsteile 16 weisen ebenso wie der erste Abschnitt 13 des Permanentmagnetes 12 den hochremanenten, in Fig. 3 mit 1 gekennzeichneten Magnetwerkstoff auf. Mit anderen Worten wird der sich ausschliesslich über die Ankerlänge $1_A$ erstreckende zweite Abschnitt 14 mit dem hochkoerzitiven Magnetwerkstoff 1 an seinen beiden Stirnseiten im Bereich der Überstandsteile 16 von dem hochremanenten Magnetwerkstoff 1 des ersten Abschnittes 13 überdeckt.

Gegenüber einem herkömmlichen Zweikomponenten-Magneten mit gleichen Abmessungen, bei welchem auch die beiden Überstandsteile 16 aus hochkoerzitiven Magnetwerkstoff 2 bestehen, weist der erfindungsgemässe Zweikomponenten-Magnet 12 eine vergrösserte Flussausbeute bei unveränderter Entmagnetisierungsfestigkeit auf. Bei einer Ankerlänge $1_A$ = 30 mm, einer Magnetlänge $1_M$ = 42 mm und einer Magnetbreite von 25 mm bei einem Breitenverhältnis des ersten Abschnittes 13 zu dem zweiten Abschnitt 14 von 14 : 11 beträgt die Vergrösserung der Flussausbeute gegenüber einem herkömmlichen Zweikomponenten-Magneten mit den gleichen Abmessungen 2,8%. Diese Vergrösserung der Flussausbeute ermöglicht bei unverändertem Motor eine entsprechende Leistungsvergrösserung. Bei konstanter Leistung hingegen lässt sich durch diese Flussvergrösserung eine Einsparung an Kupferwicklung von 5,2%, bezogen auf einen Motor der Leistung von 1,1 kW bei 12 V, erzielen.

Die Erfindung ist nicht auf das vorstehend beschriebene Ausführungsbeispiel beschränkt. Ist der Motor in seiner Drehrichtung reversibel, so ist an jedem Ende der Permanentmagneten 12 ein erfindungsgemäss gestalteter zweiter Abschnitt aus hochkoerzitiven Magnetwerkstoff 2 angeordnet. Die erfindungsgemässe Ausgestaltung der Permanentmagneten 12 lässt sich auch bei Mehrkomponenten-Magneten anwenden.

## Patentanspruch

Elektrische Maschine, insbesondere Kleinmotor, mit mindestens zwei an einem Anker gegenüberliegenden Permanentmagneten (12), die in Axialrichtung des Ankers über diesen beidseitig überstehen und jeweils mindestens einen in Axialrichtung sich erstreckenden ersten Abschnitt (13) aus einem hochremanenten Magnetwerkstoff und mindestens einen an einem in Umfangsrichtung gesehenen Ende angeordneten, in Axialrichtung sich erstreckenden zweiten Abschnitt (14) aus einem hochkoerzitiven Magnetwerkstoff aufweisen, wobei der hochremanente Magnetwerkstoff gegenüber dem hochkoerzitiven Magnetwerkstoff eine höhere Remanenz aber kleinere Grenzfeldstärke hat, dadurch gekennzeichnet, dass der zweite Abschnitt (14) sich im wesentlichen nur über die axiale Ankerlänge $(1_A)$ erstreckt und die beiden sich daran in Axialrichtung anschliessenden, über den Anker (10) vorstehenden Überstandsteile (16) einen hochremanenten Magnetwerkstoff (1), vorzugsweise den hochremanenten Magnetwerkstoff (1) des ersten Abschnitts (13), aufweisen.

## Revendication

Machine électrique, notamment petit moteur, avec au moins deux aimants permanents (12) placés l'un en face de l'autre contre un induit, et qui font saillie des deux côtés au-delà de l'induit dans la direction axiale de celui-ci, chacun de ces aimants comportant au moins une première partie (13) s'étendant en direction axiale et constituée d'un matériau magnétique hautement rémanent, ainsi qu'au moins une seconde partie (14) disposée à une extrémité vue en direction périphérique, s'étendant en direction axiale, et constituée d'un matériau magnétique hautement coercitif, le matériau magnétique hautement rémanent présentant par rapport au matériau magnétique hautement coercitif, une rémanence plus élevée mais une intensité de champ limite plus faible, machine caractérisée en ce que la seconde partie (14) s'étend en pratique seulement sur la longueur axiale de l'induit $(1_A)$ et que les deux pièces en porte-à-faux (16) se raccordant en direction axiale à la partie (14) et faisant saillie au-delà de l'induit (10) comportent un matériau magnétique hautement rémanent (1), de préférence le matériau magnétique hautement rémanent (1) de la première partie (13).

## Claim

An electrical machine, in particular a small motor, having at least two permanent magnets (12) which face one another on an armature, overlap the armature in the axial direction of the latter on both sides and each possess at least one first portion (13) extending in the axial direction, consisting of a high-remanence magnetic material and at least one second portion (14) located at one end, viewed in the circumferential direction, extending in the axial direction and consisting of a high-coercivity magnetic material, the high-remanence magnetic material having a higher remanence but lower limiting field strength than the high-coercivity magnetic material, characterised in that the second portion (14) extends essentially only over the axial armature length $(1_A)$ and the two protruding portions (16), adjoining the said second portion in the axial direction and projecting beyond the armature (10), comprise a high-remanence magnetic material (1), preferably the high-remanence magnetic material (1) of the first portion (13).

FIG. 1

FIG. 2

FIG. 3

$B = f(H)$